# FASCICULE DE BREVET EUROPEEN

(11) **EP 2 412 076 B1**
(45) Date de publication et mention de la délivrance du brevet: **18.09.2019**
(21) Numéro de dépôt: 10716573.0
(22) Date de dépôt: 23.03.2010
(51) Int. Cl.: H02K 1/18

(54) **STATOR DE MACHINE ÉLECTRIQUE TOURNANTE**
STATOR EINER DREHENDEN ELEKTRISCHEN MASCHINE
STATOR OF AN ELECTRIC ROTATING MACHINE

(30) Priorité: 24.03.2009 FR 0951889
(43) Date de publication de la demande: 01.02.2012
(73) Titulaire: Jeumont Electric, 59460 Jeumont (FR)
(72) Inventeur: LIENARD, Jean Claude, F-59740 Felleries (FR); AMMAR, Brahim, F-95380 Louvres (FR); LEGOIX, Guy, F-59600 Maubeuge (FR)
(74) Mandataire: Lebkiri, Alexandre
(86) Numéro de dépôt international: PCT/FR2010/050528
(87) Numéro de publication internationale: WO 2010/109132

(56) Documents cités:
- WO-A-00/57535
- BE-A- 642 545
- US-A- 2 970 236
- US-A- 3 064 152
- US-A- 3 114 061
- US-A- 4 015 155
- US-B1- 6 346 760

## Description

La présente invention concerne le domaine des machines tournantes électriques comprenant un ensemble statorique et un ensemble rotorique, l'ensemble rotorique pivotant par rapport à l'ensemble statorique autour d'un axe de rotation.

Plus particulièrement, la présente invention concerne un stator d'une machine électrique de moyenne ou de grande puissance.

De façon générale, on désigne par stator l'ensemble fixe de la machine électrique formé par une carcasse et un circuit magnétique bobiné.

Le circuit magnétique est formé par des tôles magnétiques empilées et maintenues pressées par une armature formée par deux plateaux reliés entre eux par des boulons ou des plats soudés, l'ensemble formant une lanterne qui est introduit dans la carcasse.

Un bobinage, formé de plusieurs bobines de cuivre isolées, est ensuite introduit dans des encoches formées par l'empilage de tôles magnétiques, le bobinage de la lanterne formant ainsi le bobinage statorique.

D'une façon générale, la carcasse d'une machine électrique de moyenne ou de grande puissance est une structure mécano-soudée réalisée en tôles d'acier apte à la protection et à la canalisation de l'air de refroidissement de la machine électrique.

La carcasse est formée par un ensemble de flasques de tôles épaisses, de l'ordre de 30 à 40mm, reliés par des tôles constituant une enveloppe extérieure, la carcasse pouvant être entretoisée par des poutres ou des colonnes de grande rigidité mécanique.

La carcasse comporte également des semelles horizontales servant de plaques de fixation de la carcasse sur le sol, ou une bride pour le montage de la carcasse selon un axe vertical.

L'enveloppe extérieure de la carcasse comporte des ouvertures pour l'entrée et la sortie du fluide de refroidissement et elle est prévue pour recevoir une ou plusieurs boîtes à bornes.

La carcasse a généralement une forme parallélépipédique et ses extrémités sont fermées par des flasques d'extrémités supportant l'ensemble rotorique.

On connaît des stators de machine tournante électrique dans lesquels l'introduction de la lanterne dans la carcasse est réalisée par le passage de celle-ci au travers d'orifices présents dans les flasques d'extrémités de la carcasse, la carcasse étant posée selon un axe vertical.

Cependant, la mise en place et le positionnement de la lanterne dans ce type de carcasse sont des opérations nécessitant d'importantes étapes de manutention et la réalisation d'une soudure complexe entre la lanterne et la carcasse, avec notamment des étapes de retournement de l'ensemble statorique pour finaliser la soudure.

De plus, le positionnement vertical de la carcasse nécessite de disposer d'une hauteur de pont importante, notamment dans le cas d'assemblage de machines électriques de grande longueur.

Afin de remédier à ces problèmes d'assemblages complexes, il a été développé des stators dont les carcasses sont formées par une enveloppe comportant plusieurs éléments : une première partie inférieure recouverte par un capot supérieur afin de permettre l'introduction de la lanterne dans la carcasse posée horizontalement dans la partie inférieure. D'une façon générale, la partie inférieure est 2 à 3 fois plus épaisse que le capot supérieur afin de supporter le rotor.

Dans ce type de stator, la carcasse est posée horizontalement et l'introduction de la lanterne est réalisée par la face supérieure de la partie inférieure, avant la mise en place du capot de recouvrement.

Des exemples de réalisation sont notamment donnés dans les documents US3064152, US6346760, US 4015155. Cependant, ce type de montage occasionne des conceptions complexes des carcasses formées par plusieurs éléments et des lanternes, et nécessite de plus une opération de réglage du positionnement horizontal de la lanterne lors de sa mise en place dans la carcasse.

En effet, la liaison entre la lanterne et la carcasse est généralement réalisée par vissage et/ou soudage de plaques, qu'il est nécessaire de souder préalablement sur l'armature de la lanterne et qui reposent sur les pattes de fixation au sol de la carcasse.

Pour remédier à cet inconvénient, le document US 3114061 propose l'utilisation d'un berceau support dans la carcasse pour positionner plus facilement la lanterne. Toutefois, avec ce type de montage, il a été démontré que l'immobilité de la lanterne n'était pas assurée lors de la transmission de couple important.

Dans ce contexte, l'invention vise à remédier à ces inconvénients en proposant un stator de machine électrique de conception simple et économique permettant un montage rapide de la lanterne dans la carcasse du stator, tout en s'affranchissant d'un réglage de centrage de la lanterne dans la carcasse et en assurant une immobilité totale de la lanterne, notamment en rotation lors du fonctionnement.

A cette fin, l'invention propose un stator d'une machine électrique tournante selon la revendication 1.

Grâce à l'invention, il est possible de réaliser la mise en place et le positionnement de la lanterne dans la carcasse facilement, tout en s'affranchissant d'une manutention importante et d'une opération de centrage de la lanterne dans la carcasse.

Le stator, selon l'invention, permet le centrage de la lanterne lors de l'opération de mise en place de la lanterne dans la carcasse et sans étape de réglage supplémentaire. Le centrage de la lanterne est réalisé au moyen des formes hémicirculaires complémentaires des joues de la lanterne et des flasques intermédiaires de la carcasse.

Le stator, selon l'invention, propose également une carcasse de conception simple formée par un unique élément supportant la lanterne ainsi qu'un système de réfrigération.

Le stator d'une machine tournante électrique selon l'invention peut également présenter une ou plusieurs des caractéristiques ci-dessous, considérées individuellement ou selon toutes les combinaisons techniquement possibles :
- le caisson comporte des moyens pour rigidifier ledit caisson ;
- lesdits moyens étant formés par un double pli de matière ou par un profilé en U, au niveau de la partie supérieure des parois latérales ;
- lesdits moyens pour rigidifier ledit caisson supportent un système de réfrigération dudit stator ;
- ladite carcasse comporte une ossature apte à rigidifier ladite carcasse ;
- ladite ossature comporte des moyens pour rigidifier ladite ossature formés par un profilé en U ;
- ladite partie supérieure desdites joues est de forme rectangulaire ;
- ladite carcasse comporte au moins deux flasques intermédiaires et ladite lanterne comporte au moins deux joues latérales.

D'autres caractéristiques et avantages de l'invention ressortiront plus clairement de la description qui en est donnée ci-dessous, à titre indicatif et nullement limitatif, en référence aux figures annexées, parmi lesquelles :
- la figure 1 est une vue éclatée en perspective illustrant une carcasse de stator d'une machine électrique selon l'invention ;
- la figure 2 est une vue en perspective d'une lanterne de stator d'une machine électrique selon l'invention ;
- la figure 3 est une vue en perspective avant assemblage du stator formé par la carcasse illustrée en figure 1 et par la lanterne illustrée en figure 2;
- la figure 4 est une vue en perspective du stator illustré en figure 3 assemblé.

Dans toutes les figures, les éléments communs portent les mêmes numéros de référence sauf précision contraire.

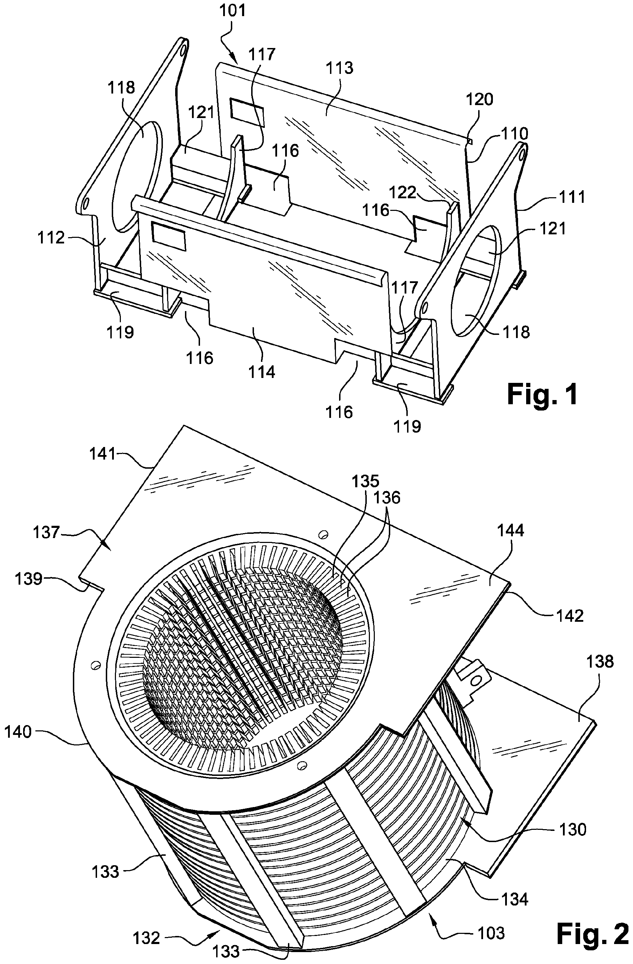

La figure 1 représente une vue éclatée en perspective d'une carcasse 101 d'un stator 100 d'une machine électrique selon l'invention.

La carcasse 101 est formée par un caisson 110 en forme de U constituant l'enveloppe externe de la carcasse 101, bordé à chaque extrémité par un flasque d'extrémité 111, 112.

Le caisson 110 est formé par une tôle pliée en U comportant deux parois latérales 113, 114 verticales.

Le caisson 110 est échancré, aux quatre coins de sa partie inférieure, de façon à former des ouvertures 116.

L'extrémité 120, des parties supérieures des parois latérales 113, 114, comporte un retour de matière formé par un double pli en forme de U dirigé vers l'extérieur de la carcasse 101.

Le double pli en U permet notamment de rigidifier les parties supérieures des parois latérales 113, 114 de la carcasse 101 sans gêner l'introduction d'une lanterne 103 par la partie supérieure de la carcasse 101, l'axe de la carcasse étant positionné horizontalement.

Les flasques d'extrémités 111, 112 bordent les extrémités du caisson 110 et comportent des ouvertures circulaires 118 aptes à l'introduction et au support d'un rotor (non représenté) par l'intermédiaire de paliers (non représentés) solidaires des flasques d'extrémités 111, 112.

Les flasques d'extrémités sont solidarisés sur le caisson 110 par soudage.

La carcasse 101 comporte également dans sa partie inférieure des pattes de fixation formées par des semelles horizontales 119 et par des tôles pliées 121, les semelles 119 comportant des trous pour la fixation de la carcasse 101 au sol.

Les semelles 119 sont agencées de sorte qu'elles s'introduisent dans les ouvertures 116 du caisson 110 lors de l'assemblage des flasques d'extrémités 111, 112 sur le caisson 110 par soudage; les semelles 119 étant soudées aux flasques d'extrémités 111, 112 et au caisson 110.

La carcasse 101 comporte également deux flasques intermédiaires 117, de forme hémicirculaire, agencés parallèlement aux flasques d'extrémités 111, 112 d'une distance sensiblement équivalente à la longueur des semelles 119, les flasques intermédiaires 117 étant solidarisés sur les semelles 119 et sur le caisson 110 par soudage.

Les parois externes des flasques intermédiaires 117 sont solidarisés par soudage sur les parois latérales 113, 114 du caisson 110, de façon à participer à la rigidification de la carcasse 101.

Ainsi, les flasques intermédiaires 117 forment dans la carcasse 101 un berceau apte à recevoir et à positionner une lanterne 103 de machine électrique tournante.

La figure 2 est une vue en perspective de la lanterne 103 du stator 100 d'une machine électrique selon l'invention.

La lanterne 103 comporte un circuit magnétique statorique 130 formé par un empilage de tôles magnétiques disposées entre deux joues 137, 138 reliées entre elles par une pluralité de barreaux 133.

Les barreaux 133 sont de forme rectiligne, d'axe longitudinal parallèle à l'axe de rotation du rotor, et maintiennent les joues 137, 138 de manière à maintenir l'empilage de tôles magnétiques en compression axiale.

L'empilage comporte une succession de paquets de tôles magnétiques 134 séparés par des évents de ventilation. Chacun des paquets étant formés par une pluralité de tôles d'acier magnétiques identiques accolées.

Chaque tôle magnétique est réalisée par découpage et comporte, sur son coté radial intérieur, des encoches 135 formées entre des dents 136, les encoches 135 étant configurées pour recevoir le bobinage du stator (non représenté).

Les joues 137, 138 comportent une partie supérieure 144 de forme rectangulaire et une partie inférieure 140 de forme hémicirculaire.

Les bordures joignant la partie supérieure 144 rectangulaire à la partie inférieure 140 hémicirculaire forment deux épaulements 139 aptes à venir en vis-à-vis avec des surfaces supérieures 122 des flasques intermédiaires 117 afin de séparer les zones de ventilation du stator et d'éviter des passages d'air.

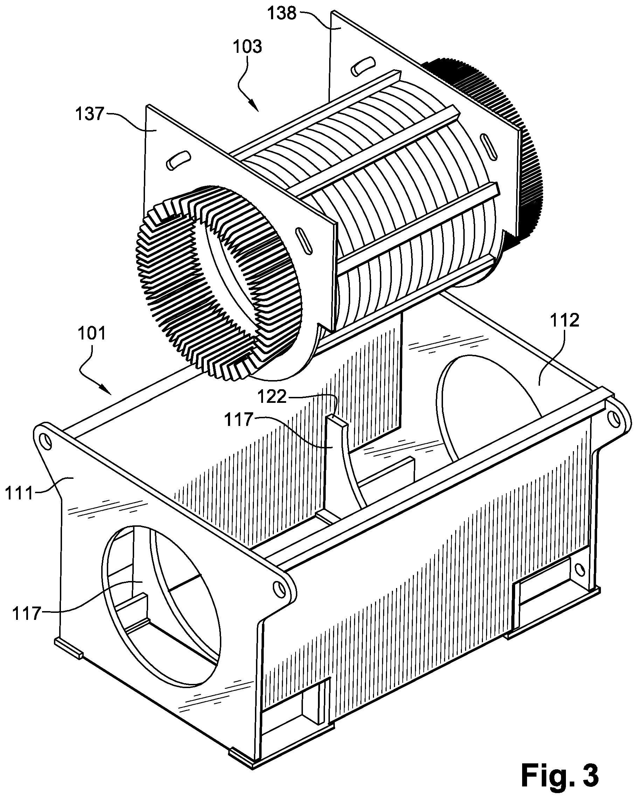

La figure 3 est une vue en perspective avant assemblage de l'ensemble statorique formé par la carcasse 101 illustrée en figure 1 et la lanterne 103 illustrée en figure 2.

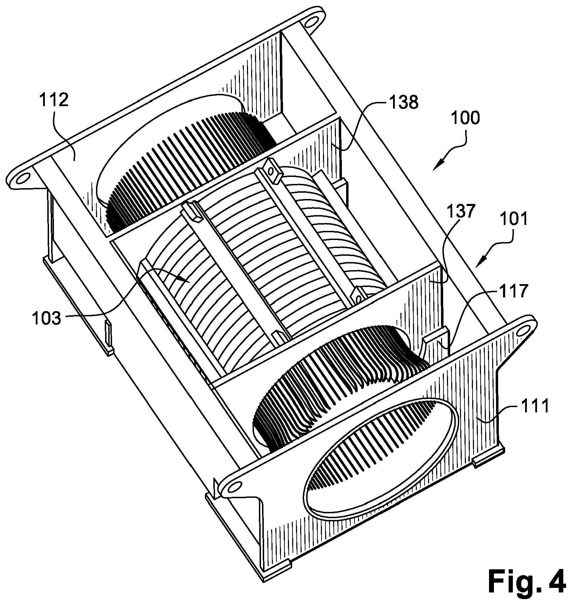

La figure 4 est une vue en perspective de l'ensemble statorique après assemblage.

Sur les figures 3 et 4, la lanterne 103 est représentée avec le bobinage statorique schématisé.

La lanterne 103 en position horizontale est assemblée par la face supérieure du caisson 101 dépourvue de capot de recouvrement.

On entend par position horizontale de la lanterne une position dans laquelle l'axe de révolution du stator est positionné sensiblement horizontalement.

Le positionnement de la lanterne 103 dans la carcasse 101 est réalisé par la mise en place de la partie inférieure 140 des joues 137, 138 sur les flasques intermédiaires 117. La forme hémicirculaire de la partie inférieure 140 des joues 137, 138 est ménagée pour épouser la forme hémicirculaire des flasques intermédiaires 117, de sorte que la forme hémicirculaire des joues 137, 138 est complémentaire de la forme hémicirculaire des flasques intermédiaires 117 de la carcasse 101.

La mise en contact entre ces deux formes hémicirculaires assure ainsi la coaxialité entre la lanterne 103 et la carcasse 101.

Les formes hémicirculaires des flasques intermédiaires 117 et des joues 137, 138 permettent ainsi de centrer rapidement et facilement la lanterne 103, et notamment le circuit magnétique statorique dans la carcasse 101.

Le positionnement des joues 137, 138 sur les flasques intermédiaires 117 permet également d'assurer l'immobilisation en rotation des tôles magnétiques, ainsi que l'immobilisation en translation de la lanterne 103 par le brochage des joues 137, 138 sur la carcasse 101, au moyen par exemple de goupilles, après mise en place de la lanterne 103.

Le brochage des joues 137, 138 sur le caisson 110 au moyen de goupille permet de plus d'amortir et de limiter la transmission de vibration entre la carcasse 101 et la lanterne 103.

Ainsi, l'invention a pour objet la réalisation d'un stator de machine tournante électrique constitué par une carcasse et par une lanterne, de conceptions simples, facilitant le centrage et l'immobilisation de la lanterne dans la carcasse et permettant la mise en place de la lanterne dans la carcasse de façon simple et rapide.

La mise en place de la lanterne est simplifiée dans un premier temps par l'introduction de la lanterne dans la carcasse par sa face supérieure, l'axe de la carcasse étant positionné horizontalement.

L'assemblage de la lanterne est simplifié dans un deuxième temps, par la conception particulière des flasques intermédiaires et par les joues de la lanterne, les flasques intermédiaires formant un berceau apte à supporter et à centrer rapidement la lanterne pourvue de joues de forme hémicirculaire complémentaire.

La réalisation de la carcasse en une pièce est permise par la forme spécifique en double pli, de la partie supérieure des parois latérales rigidifiant ainsi la structure de la carcasse et permettant la pose d'un système de réfrigération.

Ainsi, le stator selon l'invention propose une carcasse et une lanterne, de conception simple, permettant de s'affranchir d'une part des difficultés de manutention et du soudage de la lanterne et d'autre part des difficultés de conception et de centrage de la lanterne dans la carcasse.

La carcasse du stator selon l'invention, est une structure porteuse formée d'un seul tenant comportant des éléments de renforts supérieurs permettant de supporter un système de réfrigération tout en d'affranchissant de la présence d'un capot de recouvrement.

Il a été essentiellement décrit un stator d'une machine électrique comportant une carcasse formée par une tôle pliée en U réalisant l'enveloppe externe de la carcasse, toutefois, l'enveloppe externe de la carcasse peut être indifféremment remplacée par une ossature reliant les deux flasques d'extrémités et comportant un élément de renfort dans sa partie supérieure et au moins un élément de liaison pour solidariser les deux flasques d'extrémités.

L'invention a également pour objet un procédé de montage d'une lanterne dans une carcasse comportant les étapes consistant à :
- positionner la carcasse à plat de sorte que l'axe de révolution du stator est positionné horizontalement ;
- descendre la lanterne en position horizontale dans la carcasse jusqu'à la mise en contact des formes hémicirculaires des flasques intermédiaires et des joues ;
- brochage des joues sur la carcasse de sorte que la lanterne soit immobilisée dans la carcasse.

L'invention décrite est applicable indifféremment à des machines tournantes synchrones ou asynchrones.

Les autres avantages de l'invention sont notamment les suivants :
- réduction des coûts de réalisation du stator ;
- réduction du temps d'assemblage du stator ;
- facilitation de la mise en oeuvre industrielle ;
- amélioration du refroidissement du stator, notamment liée à la réalisation de la carcasse en une pièce ;
- simplification de conception de la carcasse notamment en la réalisant en une pièce ;
- meilleure tenue des paliers par les flasques d'extrémités.

## Revendications

1. Stator (100) d'une machine électrique comportant :
- une carcasse (101) formée par un caisson (110) en forme de U constituant l'enveloppe externe de la carcasse (101), le caisson (110) présentant deux parois latérales (113, 114) et étant bordé à chaque extrémité par un flasque d'extrémité (111, 112) ;
- une lanterne (103) formée par un empilement de tôles magnétiques maintenu dans une armature formée par des joues (137, 138) reliées par des barreaux (133) ;
- ladite carcasse (101) comporte des flasques intermédiaires (117) solidaires du caisson (110) de forme hémicirculaire agencés parallèlement aux flasques d'extrémités (111, 112) formant un berceau positionnant et supportant ladite lanterne (103) assemblée par la partie supérieure ouverte du caisson (110) ;
lesdites joues (137, 138) comportant une partie inférieure (140) de forme hémicirculaire adaptée pour épouser la forme hémicirculaire desdites flasques intermédiaires (117) de ladite carcasse (101),
ledit stator (100) étant **caractérisé en ce que** lesdites joues (137, 138) comportent une partie supérieure (144) présentant deux bords parallèles verticaux solidaires des parois latérales (113, 114) du caisson (110) de ladite carcasse (101) au moyen de goupilles assurant l'immobilisation en rotation et en translation de ladite lanterne (103).

2. Stator (100) d'une machine électrique tournante selon la revendication 1 **caractérisé en ce que** le caisson (110) comporte des moyens (120) pour rigidifier ledit caisson (110).

3. Stator (100) d'une machine électrique tournante selon la revendication 2 **caractérisé en ce que** lesdits moyens (120) pour rigidifier ledit caisson (110) sont formés par un double pli de matière ou par un profilé en U, au niveau de la partie supérieure des parois latérales (113, 114).

4. Stator (100) d'une machine électrique tournante selon l'une des revendications 2 à 3 **caractérisé en ce que** lesdits moyens (120) pour rigidifier ledit caisson (110) supportent un système de réfrigération dudit stator (100).

5. Stator (100) d'une machine électrique tournante selon la revendication 1 **caractérisé en ce que** ladite carcasse (101) comporte une ossature apte à rigidifier ladite carcasse.

6. Stator (100) d'une machine électrique tournante selon la revendication 5 **caractérisé en ce que** ladite ossature comporte des moyens pour rigidifier ladite ossature formés par un profilé en U.

7. Stator (100) d'une machine électrique tournante selon l'une des revendications 1 à 6 **caractérisé en ce que** ladite partie supérieure (144) desdites joues (137, 138) est de forme rectangulaire.

8. Stator (100) d'une machine électrique tournante selon l'une des revendications 1 à 7 **caractérisé en ce que** ladite carcasse (101) comporte au moins deux flasques intermédiaires (117) et ladite lanterne (103) comporte au moins deux joues latérales (137, 138).

## Patentansprüche

1. Stator (100) einer elektrischen Maschine, umfassend:
- ein Gerüst (101), das durch ein Gehäuse (110) in U-Form geformt ist, gebildet aus der äußeren Hülle des Gerüsts (101), wobei das Gehäuse (110) zwei Seitenwände (113, 114) aufweist und an jedem Ende durch einen Endflansch (111, 112) umrandet ist;
- eine Kernspindel (103), die durch eine Stapelung aus magnetischen Blechen geformt und in einem Gestell gehalten ist, das durch Wangen (137, 138) geformt ist, die durch Gitterstäbe (133) verbunden sind;
- das genannte Gerüst (101) umfasst Zwischenflansche (117), die fest mit dem Gehäuse (110) in halbkreisförmiger Form verbunden und parallel zu den Endflanschen (111, 112) angeordnet sind, die einen Spulenträger formen, der die genannte Kernspindel (103), die durch den offenen oberen Teil des Gehäuses (110) zusammengesetzt ist, positionieren und stützen;
wobei die genannten Wangen (137, 138) einen unteren Teil (140) in halbkreisförmiger Form umfassen, der geeignet ist, um die halbkreisförmige Form der genannten Zwischenflansche (117) des genannten Gerüsts (101) anzunehmen,
wobei der genannte Stator (100) **dadurch gekennzeichnet ist, dass** die genannten Wangen (137, 138) einen oberen Teil (144) umfassen, der zwei parallele, vertikale Ränder aufweist, die mit den lateralen Wänden (113, 114) des Gehäuses (110) des genannten Gerüsts (101) mittels Stiften fest verbunden sind, die die Immobilisierung der genannten Kernspindel (103) in der Rotation und der Translation gewährleisten.

2. Stator (100) einer sich drehenden, elektrischen Maschine gemäß Anspruch 1, **dadurch gekennzeichnet, dass** das Gehäuse (110) Mittel (120) zum Versteifen des genannten Gehäuses (110) umfasst.

3. Stator (100) einer sich drehenden, elektrischen Maschine gemäß Anspruch 2, **dadurch gekennzeichnet, dass** die genannten Mittel (120) zum Versteifen des genannten Gehäuses (110) durch einen doppelten Materialknick oder durch ein U-Profil am oberen Teil der Seitenwände (113, 114) geformt sind.

4. Stator (100) einer sich drehenden, elektrischen Maschine gemäß einem der Ansprüche 2 oder 3, **dadurch gekennzeichnet, dass** die genannten Mittel (120) zum Versteifen des genannten Gehäuses (110) ein Kühlsystem des genannten Stators (100) stützen.

5. Stator (100) einer sich drehenden elektrischen Maschine gemäß Anspruch 1, **dadurch gekennzeichnet, dass** das genannte Gerüst (101) ein Gerippe umfasst, das zum Versteifen des genannten Gerüsts (101) geeignet ist.

6. Stator (100) einer sich drehenden elektrischen Maschine gemäß Anspruch 5, **dadurch gekennzeichnet, dass** das genannte Gerippe Mittel zum Versteifen des genannten Gerippes umfasst, die durch ein U-Profil geformt sind.

7. Stator (100) einer sich drehenden elektrischen Maschine gemäß einem der Ansprüche 1 bis 6, **dadurch gekennzeichnet, dass** der genannte obere Teil (144) der genannten Wangen (137, 138) eine rechteckige Form aufweist.

8. Stator (100) einer sich drehenden elektrischen Maschine gemäß einem der Ansprüche 1 bis 7, **dadurch gekennzeichnet, dass** das genannte Gerüst (101) wenigstens zwei Zwischenflansche (117) umfasst und die genannte Kernspindel (103) wenigstens zwei Seitenwangen (137, 138) umfasst.

## Claims

1. A stator (100) for a rotating electrical machine comprising:
- a housing (101) formed by a U-shaped panel (110) constituting the outer casing of the housing (101), said panel (110) having two lateral walls (113, 114) and being bordered on each end by an end plate (111, 112);
- a lantern ring (103) formed by a stack of magnetic plates maintained in a frame formed by flanges (137, 138) connected by bars (133);
said housing (101) comprises intermediate plates (117) secured to the panel (110), with semicircular shape, arranged parallel with end plates (111, 112), forming a cradle positioning and supporting said lantern ring (103) assembled by the upper part of the panel (110) ;
- said flanges (137, 138) comprising a lower part (140) with a semicircular shape adapted so as to match the semicircular shape of said intermediate plates (117) of said housing (101);
said stator being **characterized in that** said flanges (137, 138) comprising an upper part (144) presenting two vertical parallel edges rigidly attached with the lateral walls (113, 114) of the panel (110) of said housing (101) by pins enabling the immobilization in rotation and translation of the lantern ring(103).

2. The stator (100) for a rotating electrical machine according to claim 1 **characterized in that** said panel (110) comprises means (120) to rigidify said panel (110).

3. The stator (100) for a rotating electrical machine according to claim 2 **characterized in that** said means (120) to rigidify said panel (110) are formed by a double fold of material or by a U profile at the level of the upper part of the lateral walls (113, 114).

4. The stator (100) for a rotating electrical machine according to one of claims 2 to 3 **characterized in that** said means (120) to rigidify said panel (110) support a refrigeration system for said stator (100).

5. The stator (100) for a rotating electrical machine according to claim 1 **characterized in that** said housing (101) comprises a framework capable of rigidifying said housing.

6. The stator (100) for a rotating electrical machine according to claim 5 **characterized in that** said framework comprises means to rigidify said framework formed by a U-profile.

7. The stator (100) for a rotating electrical machine according to one of claims 1 to 6 **characterized in that** said upper part (144) of said flanges (137, 138) is rectangular.

8. The stator (100) for a rotating electrical machine according to one of claims 1 to 7 **characterized in that** said housing (101) comprises at least two intermediate plates (117) and said lantern ring (103) comprises at least two lateral flanges (137, 138).
